# EUROPÄISCHE PATENTANMELDUNG

(11) **EP 3 315 821 A1**
(43) Veröffentlichungstag der Anmeldung: **02.05.2018**
(21) Anmeldenummer: 17001679.4
(22) Anmeldetag: 11.10.2017
(51) Int. Cl.: F16H 61/00, F16H 57/02, F16H 61/28, F16H 63/24, F16H 63/00

(54) **AUTOMATISIERTES SCHALTGETRIEBE**

(30) Priorität: 27.10.2016 DE 102016012861
(71) Anmelder: WABCO GmbH, 30432 Hannover (DE)
(72) Erfinder: Didwiszus, Lars, 31157 Sarstedt (DE); Kelpe, Holger, 30926 Seelze (DE); Kraft, Hansjörg, 30453 Hannover (DE); Poux, Romain, 30163 Hannover (DE)

(57) **Zusammenfassung**

Die Erfindung betrifft ein automatisiertes Schaltgetriebe (12), welches in einem Getriebegehäuse (14) angeordnete Getriebewellen (22, 24) aufweist, auf denen miteinander kämmende Zahnräder (70, 72; 74, 76) angeordnet sind, bei dem mehrere drehbar auf einer ersten Getriebewelle (22) angeordnete Zahnräder (70, 72) mit zugeordneten und auf einer zweiten Getriebewelle (24) angeordneten drehfesten Zahnrädern (74, 76) in Verzahnungseingriff sind, bei dem die drehbaren Zahnräder (70, 72) jeweils mittels auf ihrer Getriebewelle (22) axial benachbart angeordneten und axial verschiebbaren Schaltmuffen (46, 48) drehfest mit dieser Getriebewelle (22) verbindbar sind, und bei dem die Schaltmuffen (46, 48) mittelbar oder unmittelbar mit einem Stellglied (54, 55, 56, 57, 58) eines zugeordneten Aktuators (30, 32, 34, 36, 38) einer Getriebeschalteinheit (40) verbunden sind. Hierbei ist gemäß der Erfindung vorgesehen, dass das Getriebegehäuse (14) an einem axialen Ende mit einem Gehäuse (20) einer weiteren Antriebsstrangvorrichtung (16) verbunden ist, und dass die Aktuatoren (30, 32, 34, 36, 38) unmittelbar oder mittelbar an einer getriebeseitigen Wand (26) des Gehäuses (20) dieser weiteren Antriebsstrangvorrichtung (16) befestigt sind.

## Beschreibung

Die Erfindung betrifft ein automatisiertes Schaltgetriebe, welches in einem Getriebegehäuse angeordnete Getriebewellen aufweist, auf denen miteinander kämmende Zahnräder angeordnet sind, bei dem mehrere drehbar auf einer ersten Getriebewelle angeordnete Zahnräder mit zugeordneten und auf einer zweiten Getriebewelle angeordneten drehfesten Zahnrädern in Verzahnungseingriff sind, bei dem die drehbaren Zahnräder jeweils mittels auf ihrer Getriebewelle axial benachbart angeordneten und axial verschiebbaren Schaltmuffen drehfest mit dieser Getriebewelle verbindbar sind, und bei dem die Schaltmuffen mittelbar oder unmittelbar mit einem Stellglied eines zugeordneten Aktuators einer Getriebeschalteinheit verbunden sind.

Eine Antriebseinheit eines konventionellen Kraftfahrzeugs verfügt bekanntermaßen als Antriebsmotor über eine Brennkraftmaschine, deren Kurbelwelle über eine Kupplung mit einem Getriebe antriebswirksam verbunden werden kann. Das Getriebe kann beispielsweise als ein Schaltgetriebe oder als ein automatisiertes Schaltgetriebe ausgeführt sein. Bei einem automatisierten Schaltgetriebe erfolgt die Gangumschaltung mittels einer zum Beispiel elektrohydraulischen oder elektropneumatischen Gangwechseleinheit. Mit Hilfe von in die Gangwechseleinheit integrierten Aktuatoren erfolgt die automatisierte Betätigung beispielsweise von Schaltgabeln, mit deren Hilfe wiederum auf einer Getriebewelle angeordnete Schaltmuffen axial verschiebbar sind. Diese Schaltmuffen sind jeweils dazu ausgebildet, wenigstens ein axial benachbartes Losrad einer Getriebewelle drehfest mit dieser zu verbinden beziehungsweise wieder drehbar freizugeben. Auch die Betätigung der erwähnten Kupplung erfolgt vorzugsweise mit einer elektrohydraulischen oder elektropneumatischen Betätigungseinheit. Hierbei können sowohl die Gangwechseleinheit als auch die Betätigungseinheit für die Kupplung von einer übergeordneten Steuerungs- und/oder Regeleinrichtung angesteuert werden. Im Übrigen folgt der konstruktive Aufbau eines automatisierten Schaltgetriebes weitgehend dem eines manuell schaltbaren Getriebes und erreicht somit in Kombination mit speziell abgestimmten Fahrprogrammen auch dessen hohen Wirkungsgrad. Weiterhin entfällt der bei konventionellen Automatikgetrieben notwendige, schlupfbehaftete und demzufolge verlustbehaftete hydraulische Drehmomentwandler als Ersatz für eine herkömmliche Reibkupplung.

Die erwähnte Gangwechseleinheit ist üblicherweise radial außen an dem Getriebegehäuse angeflanscht oder in das Getriebegehäuse integriert, wodurch dessen Steifigkeit beziehungsweise mechanische Festigkeit verringert ist. Durch den geschilderten Aufbau kann es auch zu unerwünschten Schwingungen und Vibrationen des Getriebegehäuses kommen.

Der Erfindung liegt somit die Aufgabe zugrunde, ein automatisiertes Schaltgetriebe vorzustellen, dessen Getriebegehäuse eine hohe Steifigkeit sowie damit einhergehend eine geringe Vibrationsneigung aufweist.

Die Erfindung betrifft daher ein automatisiertes Schaltgetriebe, welches in einem Getriebegehäuse angeordnete Getriebewellen aufweist, auf denen miteinander kämmende Zahnräder angeordnet sind, bei dem mehrere drehbar auf einer ersten Getriebewelle angeordnete Zahnräder mit zugeordneten und auf einer zweiten Getriebewelle angeordneten drehfesten Zahnrädern in Verzahnungseingriff sind, bei dem die drehbaren Zahnräder jeweils mittels auf ihrer Getriebewelle axial benachbart angeordneten und axial verschiebbaren Schaltmuffen drehfest mit dieser Getriebewelle verbindbar sind, und bei dem die Schaltmuffen mittelbar oder unmittelbar mit einem Stellglied eines zugeordneten Aktuators einer Getriebeschalteinheit verbunden sind.

Zur Lösung der vorstehend genannten Aufgabe ist vorgesehen, dass das Getriebegehäuse an einem axialen Ende mit einem Gehäuse einer weiteren Antriebsstrangvorrichtung verbunden ist, und dass die Aktuatoren unmittelbar oder mittelbar an einer getriebeseitigen Wand des Gehäuses dieser weiteren Antriebsstrangvorrichtung befestigt sind.

Hierdurch wird eine strukturelle Schwächung des Getriebegehäuses vermieden, da an dessen radiale Außenseite keine Montageöffnung für die Getriebeschalteinheit beziehungsweise deren Aktuatoren vorzusehen ist. Infolgedessen weist das Getriebegehäuse eine erhöhte mechanische Steifigkeit auf, die einen vibrationsarmen und damit einhergehend einen geräuscharmen Lauf des automatisierten Schaltgetriebes ermöglicht.

Gemäß einer vorteilhaften Ausgestaltung ist vorgesehen, dass die Aktuatoren an der getriebeseitigen Stirnseite der getriebeseitigen Wand des Gehäuses der weiteren Antriebsstrangvorrichtung befestigt sind. Hierdurch müssen die Stellglieder der Aktuatoren die genannte Gehäusewand nicht durchdringen und die mechanische Verbindung des Stellgliedes des jeweiligen Aktuators mit einer auf die zugeordnete Schiebemuffe wirkenden Schaltgabel ist besonders einfach möglich. Außerdem können die Aktuatoren sehr einfach beispielsweise an der getriebeseitigen Stirnseite dieser Wand des Gehäuses der weiteren Antriebsstrangvorrichtung festgeschraubt sein.

Gemäß einer anderen Ausführungsform ist vorgesehen, dass die Aktuatoren in einem ringförmigen oder ringsegmentförmigen Flansch angeordnet sind, welcher mit einem axialen Ende mit den Getriebegehäuse sowie mit seinem anderen axialen Ende mit dem Gehäuses der weiteren Antriebsstrangvorrichtung verbunden ist. Durch die Anordnung der Aktuatoren an dem Flansch können das Getriebegehäuse sowie das Gehäuse der weiteren Antriebsstrangvorrichtung, also beispielsweise ein Kupplungsgehäuse, eines bereits vorhandenen Antriebsstrangs konstruktiv weitgehend unverändert bleiben, denn es wird axial zwischen diesen beiden lediglich der Flansch montiert, welcher die Aktuatoren des Getriebes trägt. Demnach kann der ringförmige oder ringsegmentförmige Flansch sowie die daran befestigten Aktuatoren zunächst als gesondertes Zusammenbauteil zusammengebaut und dann anschließend der Zusammenbaumontage von Getriebe und Kupplung zugeführt werden.

Weiter kann vorgesehen sein, dass die Aktuatoren selbst oder zumindest deren Stellglieder eine axial gegenüberliegende Wand des Getriebegehäuses axial außen durchdringen und in das Getriebegehäuse hinein ragen.

Bei dem Gehäuse der weiteren Antriebsstrangvorrichtung kann es sich beispielsweise um ein Kupplungsgehäuse handeln, in dem auch eine als Anfahr- und Schaltkupplung dienende Reibkupplung sowie ein mit einer Motorwelle verbundenes Schwungrad angeordnet sind. Bei dem Gehäuse der weiteren Antriebsstrangvorrichtung kann es sich aber auch um das Gehäuse einer Starter-Generator-Einheit handeln, welche eine alternativ als Startermotor oder als Generator betreibbare Elektromaschine aufweist. Bei einem Hybrid-Fahrzeug kann diese Elektromaschine sowohl die Funktion eines Startermotors zum Starten einer Brennkraftmaschine erfüllen als auch vortriebswirksam als Elektromotor genutzt werden.

Gemäß einer anderen Ausführungsform kann vorgesehen sein, dass an einer getriebefernen Innenfläche der getriebeseitigen Wand des Gehäuses der weiteren Antriebsstrangvorrichtung wenigstens eine Aktuator-Steuerungsvorrichtung der Getriebeschalteinheit angeordnet ist. Infolgedessen ergibt sich eine optimale Ausnutzung des innerhalb des Getriebegehäuses zur Verfügung stehenden Bauraums, denn die Steuerungselemente für die Getriebeschalteinheit befinden sich dann innerhalb des Gehäuses einer Anfahr- und Schaltkupplung oder einer Starter-Generator-Einheit.

Gemäß einer anderen günstigen Weiterbildung der Erfindung ist vorgesehen, dass im Bereich einer radialen Außenseite des Gehäuses der weiteren Antriebsstrangvorrichtung eine elektronische Steuerungs- und/oder Regeleinheit der Getriebeschalteinheit angeordnet ist. Wegen der bevorzugt an der Außenseite dieses Gehäuses angeordneten elektronischen Steuerungs- und/oder Regeleinheit der Getriebeschalteinheit ist diese beispielsweise für Diagnose- und Reperaturarbeiten leicht zugänglich.

Die Aktuatoren können pneumatisch, hydraulisch, elektrohydraulisch, elektromotorisch, elektromagnetisch oder durch eine Kombination von mindestens zwei der genannten Wirkmechanismen betätigbar sein. Hierdurch kann die Getriebeschalteinheit flexibel mit einem jeweils an Bord des Kraftfahrzeugs zur Verfügung stehenden Medium betrieben werden. Beispielsweise bietet sich für den Fall, dass es sich bei dem Kraftfahrzeug um einen Lastkraftwagen handelt, der Einsatz von pneumatisch betriebenen Aktuatoren an, da Druckluft an Bord von Lastkraftwagen bei einem Betrieb derselben vorhanden ist. Für den Fall eines Personenkraftwagens bieten sich hingegen eher elektromotorisch, elektromagnetisch oder elektrohydraulisch betriebene Aktuatoren an.

Zum besseren Verständnis der Erfindung ist der Beschreibung eine Zeichnung mit Ausführungsbeispielen beigefügt. In dieser zeigt
Fig. 1 eine getriebeseitige Ansicht eines Kraftfahrzeugantriebsstrangs gemäß einer ersten Ausführungsform, mit einem automatisierten Schaltgetriebe sowie mit einem antriebsmotorseitig daran befestigten Kupplungsgehäuse,
Fig. 2 eine kupplungsseitige Ansicht auf das Schaltgetriebe und das Kupplungsgehäuse gemäß Fig. 1, und
Fig. 3 eine getriebeseitige Ansicht eines Kraftfahrzeugantriebsstrangs gemäß einer zweiten Ausführungsform, mit einem automatisierten Schaltgetriebe und einem Kupplungsgehäuse, die über einen axial dazwischen angeordneten ringförmigen Flansch miteinander verbunden sind, an oder in dem Aktuatoren zur Betätigung des Getriebes angeordnet sind.

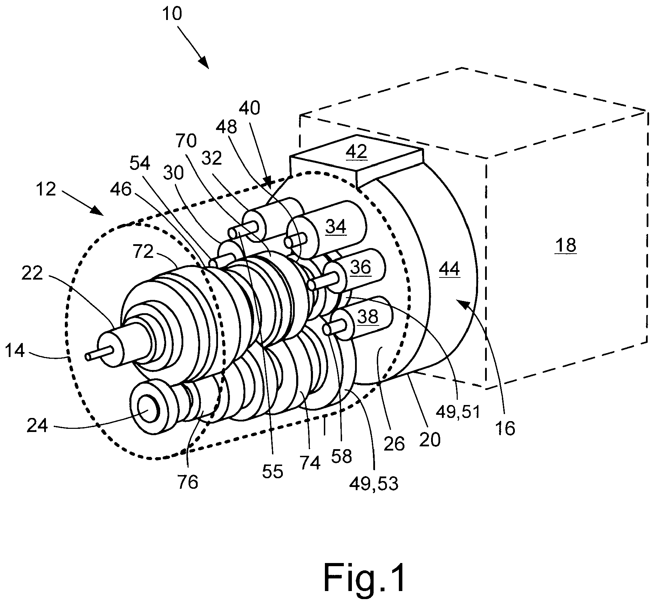

Demnach zeigt Fig. 1 einen Antriebsstrang 10 für ein Kraftfahrzeug, beispielsweise für einen Lastkraftwagen oder einen Personenkraftwagen, die ein automatisiertes Schaltgetriebe 12 mit einem Getriebegehäuse 14 aufweist. Das automatisierte Schaltgetriebe 12 ist über eine im Einzelnen nicht dargestellte schaltbare Kupplung 16 von einer zeichnerisch lediglich angedeuteten Brennkraftmaschine 18 antreibbar. Die Kupplung 16 ist in einem Kupplungsgehäuse 20 angeordnet. Sie kann beispielsweise als eine hinlänglich bekannte Trockenreibkupplung ausgebildet sein, welche mittels eines nicht gezeigten Aktuators und eines Steuerungsgerätes betätigbar ist.

Das stark vereinfacht dargestellte automatisierte Schaltgetriebe 12 ist als Vorgelegegetriebe ausgebildet ist, bei dem eine Eingangswelle 50 über eine zwei Zahnräder 51, 53 aufweisende Eingangsstirnradstufe 49 eine Vorgelegewelle 24 antreibt. Auf der Vorgelegewelle 24 sind auch als Festräder bezeichnete Zahnräder 74, 76 drehfest angeordnet, während auf und einer dazu achsparallel angeordneten Ausgangswelle 22 auch als Losräder bezeichnete Zahnräder 70, 72 drehbar angeordnet sind. Den drehbaren Zahnrädern 70, 72 auf der Ausgangswelle 22 ist jeweils eine Schaltmuffe 46, 48 zugeordnet, welche axial verschiebbar und drehfest auf der Ausgangswelle 22 angeordnet sind. Mittels der Schaltmuffen 46, 48 sind die drehbaren Zahnräder 70, 72 wechselweise drehfest mit der Ausgangswelle 22 verbindbar oder drehbar freigebbar. Die Schaltmuffen 46, 48 werden mittels nicht dargestellter Schaltgabeln betätigt, welche mit einem jeweils zugeordneten Stellglied 54, 55, 56, 57, 58, wie beispielsweise Kolben eines Aktuators 30, 32, 34 , 36, 38 verbunden sind. Erkennbar sind zur besseren Übersicht nicht alle Festräder und Losräder dieses Schaltgetriebes 12 mit Bezugszeichen versehen und gesondert benannt. Der allgemeine Aufbau eines solchen automatisierten Schaltgetriebes ist dem Fachmann aber an sich bekannt.

Wie Fig. 1 zeigt, sind gemäß der Erfindung an einer dem automatisierten Schaltgetriebe 12 zugewandten Wand 26 des Kupplungsgehäuses 20 beispielhaft fünf Aktuatoren 30, 32, 34, 36, 38 befestigt, die zur Betätigung von fünf Schaltmuffen 46, 48 dienen und einen funktionalen Teil einer Getriebeschalteinheit 40 des automatisierten Schaltgetriebes 12 verkörpern. Die Getriebeschalteinheit 40 umfasst darüber hinaus eine vorzugsweise elektronische Steuerungs- und/oder Regeleinheit 42, die hier beispielhaft an der radialen Außenseite 44 des Kupplungsgehäuses 20 angeordnet ist.

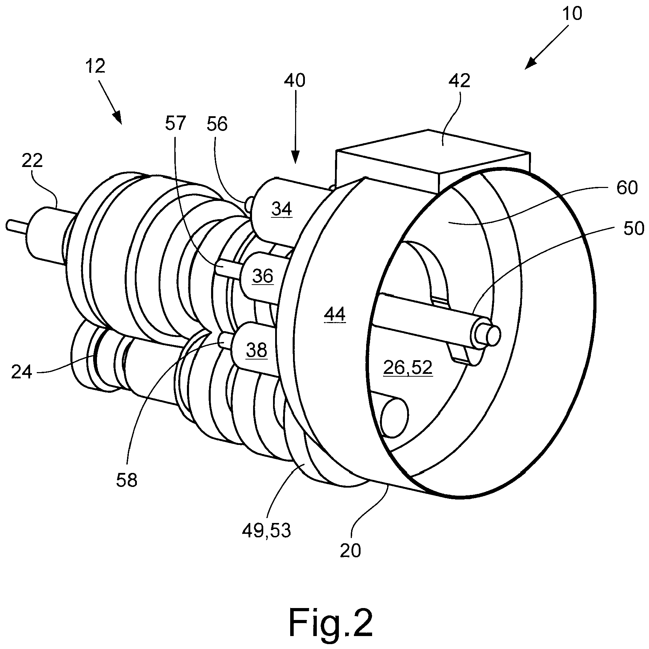

Mit Hilfe der von der Steuerungs- und/oder Regeleinheit 42 mittelbar über eine in Fig. 2 erkennbare Aktuator-Steuerungsvorrichtung 60 betätigten Aktuatoren 30, 32, 34, 36, 38 lässt sich das automatisierte Schaltgetriebe 12 zur Realisierung spezieller Fahrprogramme unter Verwendung geeigneter Programmalgorithmen ansteuern. Hierbei können die Gangwechsel beispielsweise ohne aktives Zutun des Fahrers vollautomatisch und/oder mittels eines Wählhebels gegebenenfalls auch manuell befehligt werden.

Mithilfe der fünf Aktuatoren 30, 32, 34, 36, 38 werden wie erwähnt mechanische Stellglieder, insbesondere Schaltmuffen und Schaltgabeln, von denen hier der besseren Übersicht halber lediglich zwei Schaltmuffen 46, 48 mit Bezugsziffern versehen sind, innerhalb des automatisierten Schaltgetriebes 12 jeweils unter der Kontrolle der Steuerungs- und/oder Regeleinrichtung 42 betätigt, um zwischen verschiedenen Gängen des automatisierten Schaltgetriebes 12 umzuschalten beziehungsweise um einen Gangwechsel vorzunehmen.

Die Aktuatoren 30, 32, 34, 36, 38 können insbesondere in Abhängigkeit von einem an Bord des Kraftfahrzeugs zur Verfügung stehenden Arbeitsmedium, wie zum Beispiel Druckluft oder Hydrauliköl, beispielsweise als pneumatisch, hydraulisch, elektrohydraulisch oder elektropneumatisch betätigbare Kolben-Zylinder-Anordnungen realisiert sein. Alternativ dazu können die Aktuatoren 30, 32, 34, 36, 38 auch elektromotorisch, zum Beispiel mittels eines elektromotorisch betriebenen Spindelantriebs, elektromagnetisch und/oder piezoelektrisch arbeiten. Der detaillierte konstruktive Aufbau eines derartigen automatisierten Schaltgetriebes 12 mit der Getriebeschalteinheit 40 ist dem auf dem Gebiet der Getriebekonstruktion tätigen Fachmann aus dem Stand der Technik hinreichend geläufig, so dass an dieser Stelle auf eine eingehendere Beschreibung verzichtet werden kann.

Von Bedeutung ist, dass die Getriebeschalteinheit 40 in diesem Ausführungsbeispiel dem Kupplungsgehäuse 16 zugeordnet ist, so dass keine strukturelle Schwächung des Getriebegehäuses 14 aufgrund einer räumlichen Integration der Getriebeschalteinheit 40 an oder in das Getriebegehäuse 14 auftritt. Durch die Anordnung der Getriebeschalteinheit 40 außerhalb des Getriebegehäuses 14 ergibt sich eine strukturmechanisch sehr steife Konstruktion des Getriebegehäuses 14, woraus wiederum ein besonders vibrationsarmer und geräuscharmer Lauf des automatisierten Schaltgetriebes 12 gepaart mit einer langen Lebensdauer resultiert.

Fig. 2 zeigt schematisch eine perspektivische, kupplungsseitige Ansicht auf das automatisierte Schaltgetriebe 12 mit dem Kupplungsgehäuse 20 gemäß Fig. 1. In dieser Ansicht ist erkennbar, dass die bereits erwähnte Antriebswelle 50 die getriebeseitige Wand 26 des Kupplungsgehäuses 20 axial durchdringt und axial in das Schaltgetriebe 12 hinein ragt. Im Bereich einer kupplungsseitigen Innenfläche 52 der getriebeseitigen Wand 26 des Kupplungsgehäuses 20 ist im Wesentlichen axial gegenüberliegend zu den hier lediglich drei sichtbaren Aktuatoren 34, 36, 38 die bereits erwähnte, beispielsweise elektropneumatisch arbeitende Aktuator-Steuerungsvorrichtung 60 als weitere funktionale Komponente der Getriebeschalteinheit 40 des automatisierten Schaltgetriebes 12 befestigt. Diese Aktuator-Steuerungsvorrichtung 60 steuert die Aktuatoren 30, 32, 34, 36, 38 der Getriebeschalteinheit 40 unmittelbar an und wird ihrerseits von der elektronischen, digitalen Steuerungs- und/oder Regeleinheit 42 kontrolliert, welche an der Außenseite 44 des Kupplungsgehäuses 20 angeordnet ist. Die Aktuator-Steuerungsvorrichtung 60 kann beispielsweise Magnetventile oder dergleichen zur elektromagnetischen Ansteuerung der beispielsweise pneumatischen oder hydraulischen Aktuatoren 30, 32, 34, 36, 38 der Getriebeschalteinheit 40 aufweisen.

Für den Fall, dass die Aktuatoren 30, 32, 34, 36, 38 zum Beispiel elektromotorisch, elektromagnetisch oder piezoelektrisch betrieben werden, kann die Aktuator-Steuerungsvorrichtung 60 Relais, Schütze und/oder elektronische Leistungsschalter beziehungsweise Halbleiterschalter aufweisen, die wiederum von der Steuerungs- und/oder Regeleinheit 42 kontrolliert werden.

Wie insbesondere Fig. 1 zeigt, ist das Getriebegehäuse 14 an seinem motorseitigen axialen Ende mit dem Gehäuse 20 einer als Anfahr- und Schaltkupplung ausgebildeten Reibkupplung 16 fest verbunden. Die Aktuatoren 30, 32, 34, 36, 38 sind erkennbar an der getriebeseitigen Stirnseite einer getriebeseitigen Wand 26 des Gehäuses 20 dieser Kupplung 16 befestigt, und die als Kolben ausgebildeten Stellglieder 54, 55, 56, 57, 58 der Aktuatoren 30, 32, 34, 36, 38 sind über nicht dargestellte Schaltgabeln mit den jeweils zugeordneten Schaltmuffen 46, 48 stellwirksam verbunden.

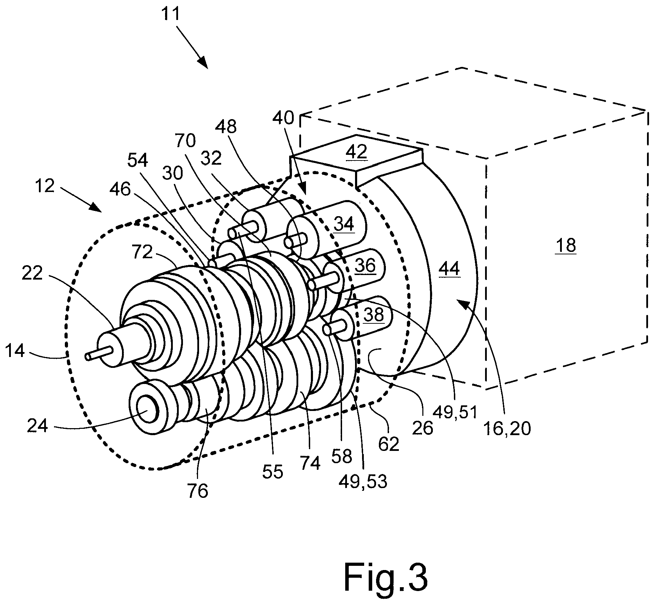

Fig. 3 zeigt eine zweite Ausführungsform eines erfindungsgemäß ausgebildeten Antriebsstranges 11 eines Kraftfahrzeugs, bei dem axial zwischen einem automatisierten Schaltgetriebe 12 und einem Kupplungsgehäuse 20 ein ringförmiger Flansch 62 angeordnet und an diesen beiden befestigt ist. Die Aktuatoren 30, 32, 34, 36, 38 zur Betätigung des automatisierten Schaltgetriebes 12 sind an der zylindrischen Wand des ringförmigen Flansches 62 befestigt, so dass der ringförmige Flansch 62 und die Aktuatoren 30, 32, 34, 36, 38 ein Zusammenbauteil bilden, welches nach dessen Zusammenbau an dem Getriebegehäuse 14 und an dem Gehäuse 20 der Kupplung, also der weiteren Antriebsstrangvorrichtung 16, befestigt wurde. Durch die Anordnung der Aktuatoren 30, 32, 34, 36, 38 an dem ringförmigen Flansch 62 können das Getriebegehäuse 14 sowie das Gehäuse 20 der Kupplung 16 eines vorhandenen Antriebsstranges 11 konstruktiv weitgehend unverändert bleiben.

Die Steuerungs- und/oder Regelungseinheit 42 für die Aktuatoren 30, 32, 34, 36, 38 kann anderes als in Fig. 3 dargestellt auch radial außen an dem ringförmigen Flansch 62 befestigt sein. Auch bei dieser zweiten Ausführungsform des Antriebsstrangs 11 kann das Getriebegehäuse 14 ohne Durchbrüche für die Aktuatoren 30, 32, 34, 36, 38 oder zumindest für deren Stellglieder 54, 55, 56, 57, 58 ausgebildet sein, so dass die mechanische Stabilität des Getriebegehäuses 14 vergleichsweise hoch ist.

### Bezugszeichenliste (Teil der Beschreibung)

- 10: Antriebsstrang (erste Ausführungsform)
- 11: Antriebsstrang (zweite Ausführungsform)
- 12: Automatisiertes Schaltgetriebe
- 14: Getriebegehäuse
- 16: Antriebsstrangvorrichtung, Kupplung
- 18: Antriebsmotor, Brennkraftmaschine
- 20: Kupplungsgehäuse
- 22: Erste Getriebewelle, Ausgangswelle
- 24: Zweite Getriebewelle, Vorgelegewelle
- 26: Wand des Kupplungsgehäuses 20
- 30: Erster Aktuator
- 32: Zweiter Aktuator
- 34: Dritter Aktuator
- 36: Vierter Aktuator
- 38: Fünfter Aktuator
- 40: Getriebeschalteinheit
- 42: Steuerungs- und/oder Regeleinheit
- 44: Außenseite des Kupplungsgehäuses
- 46: Erste Schaltmuffe
- 48: Zweite Schaltmuffe
- 49: Eingangsstirnradstufe
- 50: Antriebswelle
- 51: Erstes Zahnrad der Eingangsstirnradstufe 49
- 52: Innenfläche der Wand 26 des Kupplungsgehäuses 20
- 53: Zweites Zahnrad der Eingangsstirnradstufe 49
- 54: Stellglied des ersten Aktuators
- 55: Stellglied des zweiten Aktuators
- 56: Stellglied des dritten Aktuators
- 57: Stellglied des vierten Aktuators
- 58: Stellglied des fünften Aktuators
- 60: Aktuator-Steuerungsvorrichtung
- 62: Ringförmiger Flansch zwischen dem Getriebegehäuse 14 und dem Gehäuse 20 der Antriebsstrangvorrichtung 16
- 70: Drehbares erstes Zahnrad auf der Ausgangswelle 22
- 72: Drehbares zweites Zahnrad auf der Ausgangswelle 22
- 74: Drehfestes erstes Zahnrad auf der Vorgelegewelle 24
- 76: Drehfestes zweites Zahnrad auf der Vorgelegewelle 24

## Patentansprüche

1. Automatisiertes Schaltgetriebe (12), welches in einem Getriebegehäuse (14) angeordnete Getriebewellen (22, 24) aufweist, auf denen miteinander kämmende Zahnräder (70, 72; 74, 76) angeordnet sind, bei dem mehrere drehbar auf einer ersten Getriebewelle (22) angeordnete Zahnräder (70, 72) mit zugeordneten und auf einer zweiten Getriebewelle (24) angeordneten drehfesten Zahnrädern (74, 76) in Verzahnungseingriff sind, bei dem die drehbaren Zahnräder (70, 72) jeweils mittels auf ihrer Getriebewelle (22) axial benachbart angeordneten und axial verschiebbaren Schaltmuffen (46, 48) drehfest mit dieser Getriebewelle (22) verbindbar sind, und bei dem die Schaltmuffen (46, 48) mittelbar oder unmittelbar mit einem Stellglied (54, 55, 56, 57, 58) eines zugeordneten Aktuators (30, 32, 34, 36, 38) einer Getriebeschalteinheit (40) verbunden sind, **dadurch gekennzeichnet, dass** das Getriebegehäuse (14) an einem axialen Ende mit einem Gehäuse (20) einer weiteren Antriebsstrangvorrichtung (16) verbunden ist, und dass die Aktuatoren (30, 32, 34, 36, 38) unmittelbar oder mittelbar an einer getriebeseitigen Wand (26) des Gehäuses (20) dieser weiteren Antriebsstrangvorrichtung (16) befestigt sind.

2. Automatisiertes Schaltgetriebe nach Anspruch 1, **dadurch gekennzeichnet, dass** die Aktuatoren (30, 32, 34, 36, 38) an der getriebeseitigen Stirnseite der getriebeseitigen Wand (26) des Gehäuses (20) der weiteren Antriebsstrangvorrichtung (16) befestigt sind.

3. Automatisiertes Schaltgetriebe nach Anspruch 1 oder 2, **dadurch gekennzeichnet, dass** die Aktuatoren (30, 32, 34, 36, 38) in einem ringförmigen oder ringsegmentförmigen Flansch (62) angeordnet sind, welcher mit einem axialen Ende mit den Getriebegehäuse (14) sowie mit seinem anderen axialen Ende mit dem Gehäuses (20) der weiteren Antriebsstrangvorrichtung (16) verbunden ist.

4. Automatisiertes Schaltgetriebe nach Anspruch 3, **dadurch gekennzeichnet**, die in dem ringförmigen oder ringsegmentförmigen Flansch (62) angeordnet Aktuatoren (30, 32, 34, 36, 38) fest mit diesem verbunden sind.

5. Automatisiertes Schaltgetriebe nach einem der vorherigen Ansprüche, **dadurch gekennzeichnet, dass** die Aktuatoren (30, 32, 34, 36, 38) selbst oder zumindest deren Stellglieder (54, 55, 56, 57, 58) eine axial gegenüberliegende Wand des Getriebegehäuses (14) axial durchdringen und in das Getriebegehäuse (14) hinein ragen.

6. Automatisiertes Schaltgetriebe nach einem der vorherigen Ansprüche, **dadurch gekennzeichnet, dass** das Gehäuses (20) der weiteren Antriebsstrangvorrichtung (16) ein Kupplungsgehäuse ist.

7. Automatisiertes Schaltgetriebe nach einem der vorherigen Ansprüche, **dadurch gekennzeichnet, dass** das Gehäuses (20) der weiteren Antriebsstrangvorrichtung (16) das Gehäuse einer Starter-Generator-Einheit ist.

8. Automatisiertes Schaltgetriebe nach einem der vorherigen Ansprüche, **dadurch gekennzeichnet, dass** an einer getriebefernen Innenfläche (52) der getriebeseitigen Wand (26) des Gehäuses (20) der weiteren Antriebsstrangvorrichtung (16) wenigstens eine Aktuator-Steuerungsvorrichtung (60) der Getriebeschalteinheit (40) angeordnet ist.

9. Automatisiertes Schaltgetriebe nach einem der vorherigen Ansprüche, **dadurch gekennzeichnet, dass** im Bereich einer radialen Außenseite (44) des Gehäuses (20) der weiteren Antriebsstrangvorrichtung (16) eine elektronische Steuerungs- und/oder Regeleinheit (42) der Getriebeschalteinheit (40) angeordnet ist.

10. Automatisiertes Schaltgetriebe nach einem der vorherigen Ansprüche, **dadurch gekennzeichnet, dass** die Aktuatoren (30, 32, 34, 36, 38) pneumatisch, hydraulisch, elektrohydraulisch, elektromotorisch, elektromagnetisch oder durch eine Kombination von mindestens zwei der genannten Wirkmechanismen betätigbar sind.
